(19) Europäisches Patentamt
European Patent Office
Office européen des brevets

(11) **EP 4 768 540 A1**

(12) **EUROPEAN PATENT APPLICATION**
published in accordance with Art. 153(4) EPC

(43) Date of publication:
**01.07.2026 Bulletin 2026/27**

(21) Application number: **24856268.8**

(22) Date of filing: **05.08.2024**

(51) International Patent Classification (IPC):
*C08L 67/00* (2006.01)  *C08K 3/22* (2006.01)
*C08L 27/12* (2006.01)

(52) Cooperative Patent Classification (CPC):
**C08K 3/22; C08L 27/12; C08L 67/00**

(86) International application number:
**PCT/JP2024/027857**

(87) International publication number:
**WO 2025/041576 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.08.2023 JP 2023135578**

(71) Applicant: **Sumitomo Chemical Company, Limited
Tokyo 103-6020 (JP)**

(72) Inventor: **SAKAI, Taiga
Tsukuba-shi, Ibaraki 300-3294 (JP)**

(74) Representative: **Vossius & Partner
Patentanwälte Rechtsanwälte mbB
Siebertstraße 3
81675 München (DE)**

(54) **RESIN COMPOSITION, MOLDED ARTICLE, AND SLIDING MEMBER**

(57) The resin composition of the present invention contains a liquid crystal polyester resin, a fluororesin, and an oxide of a metal element belonging to Group 2 elements of the long form of the periodic table, and is free of a fibrous filler, in which the content of the metal element belonging to Group 2 elements is 0.01% by mass or more and 2.0% by mass or less, based on 100% by mass of the total mass of the resin composition.

EP 4 768 540 A1

**Description**

Technical Field

The present invention relates to a resin composition, a molded article, and a sliding member.
The present application claims priority based on Japanese Patent Application No. 2023-135578 filed in Japan on August 23, 2023, the content of which is incorporated herein by reference in its entirety.

Background Art

Molded articles molded from a resin composition including a liquid crystal polyester resin and a fluororesin have been known to undergo little dimensional change even when a constant load is continuously applied to the molded article.
Patent Literature 1 discloses a liquid crystal polyester resin composition including 5 to 180 parts by weight of at least one or more compounds selected from an oxide, a peroxide, a double oxide, and a carbonate of a metal element belonging to Group 1A or 2A elements in the short form of the periodic table and 0.1 to 80 parts by weight of a fluororesin, based on 100 parts by weight of the liquid crystal polyester.

Citation List

Patent Literature

Patent Literature 1: Japanese Patent Laid-Open No. H10-25402

Summary of Invention

Problems to be Solved by Invention

Industrial products and their materials may be transported by sea. For example, when a ship passes through the equator on its sea route, the environment inside a container of the ship is said to be hotter and more humid than the outside air (for example, 40°C or higher and a relative humidity of 80% or higher).
However, the molded article molded using the liquid crystal polyester resin composition disclosed in Patent Literature 1 as a molding material has a problem of generating corrosive gas therefrom and increasing the likelihood of being worn out under elevated temperature and high humidity conditions, such as when a ship passes through the equator during transport.
The present disclosure has been made in consideration of the circumstances described above and an object of the present invention is to provide a resin composition that provides a molded article that contains a liquid crystal polyester resin, inhibits generation of corrosive gas, and maintains its abrasion resistance. Another object of the present invention is to provide a molded article including the resin composition and a sliding member including this molded article.

Means to Solve the Problems

In order to solve the problems described above, the present disclosure encompasses the following aspects.

[1] A resin composition comprising a liquid crystal polyester resin, a fluororesin, and an oxide of a metal element belonging to Group 2 elements in the long form of the periodic table, and is free of a fibrous filler, wherein a content of the metal element belonging to Group 2 elements is 0.01% by mass or more and 2.0% by mass or less, based on 100% by mass of a total mass of the resin composition.
[2] The resin composition according to [1] above, wherein the content of the metal element belonging to Group 2 elements is 0.04 parts by mass or more and 8 parts by mass or less, based on 100 parts by mass of the fluororesin.
[3] The resin composition according to [1] or [2] above, wherein a content of the oxide of the metal element belonging to Group 2 elements is more than 0.01% by mass and less than 3.0% by mass, based on 100% by mass of the total mass of the resin composition.
[4] The resin composition according to any one of [1] to [3] above, wherein a content of the fluororesin is 10 parts by mass or more and 50 parts by mass or less, based on 100 parts by mass of the liquid crystal polyester resin.
[5] The resin composition according to any one of [1] to [4] above, wherein the metal element belonging to Group 2 elements is at least one selected from the group consisting of calcium and magnesium.
[6] The resin composition according to [5] above, wherein the metal element belonging to Group 2 elements is calcium.
[7] The resin composition according to any one of [1] to [6] above, wherein the liquid crystal polyester resin has a repeating unit represented by the following formula (1), a repeating unit represented by the following formula (2), and a repeating unit represented by the following formula (3):

(1) $\quad$ -O-Ar$^1$-CO-

(2) $\quad$ -CO-Ar$^2$-CO-

(3) $\quad$ -X-Ar$^3$-Y-

wherein Ar$^1$ represents a phenylene group, a naphthylene group, or a biphenylylene group; Ar$^2$ and Ar$^3$ each independently represent a phenylene group, a naphthylene group, a biphenylylene group, or a group represented by the following formula (4); X and Y each independently represents an oxygen atom or an imino group (-NH-); one or more hydrogen atoms in the group represented by Ar$^1$, Ar$^2$, or Ar$^3$ are each independently optionally substituted with a halogen atom, an alkyl group having 1 to 10 carbon atoms, or an aryl group having 6 to 20 carbon atoms,

(4) $\quad$ -Ar$^4$-Z-Ar$^5$-

wherein Ar$^4$ and Ar$^5$ each independently represents a phenylene group or a naphthylene group, Z represents an oxygen atom, a sulfur atom, a carbonyl group, a sulfonyl group, or an alkylidene group having 1 to 10 carbon atoms; and one or more hydrogen atoms in the group represented by Ar$^4$ or Ar$^5$ are each independently optionally substituted with a halogen atom, an alkyl group having 1 to 10 carbon atoms, or an aryl group having 6 to 20 carbon atoms.

[8] A molded article comprising the resin composition according to any one of [1] to [7] above.

[9] A sliding member comprising the molded article according to [8] above.

Effects of Invention

According to the present disclosure, it is possible to provide a resin composition that provides a molded article that contains a liquid crystal polyester resin, inhibits generation of corrosive gas, and maintains its abrasion resistance.

In addition, according to the present disclosure, it is possible to provide a molded article that maintains its abrasion resistance under elevated temperature and high humidity conditions and a sliding member including this molded article.

Embodiments for Carrying out Invention

(Resin composition)

One embodiment of the resin composition contains a liquid crystal polyester resin, a fluororesin, and an oxide of a metal element belonging to Group 2 elements in the long form of the periodic table, and is free of a fibrous filler, in which the content of the metal element belonging to Group 2 elements is 0.01% by mass or more and 2.0% by mass or less, based on 100% by mass of the total mass of the resin composition.

In the present description, the term "resin composition" refers to a mixture obtained by mixing the liquid crystal polyester resin, the fluororesin, the oxide of the metal element belonging to Group 2 elements in the long form of the periodic table, and other components, if necessary. The resin composition may be in pellet form.

The resin composition in the present embodiment is free of a fibrous filler, so that it is less likely to damage a mating material although being a soft metal (for example, SUS or aluminum) that comes into contact with a sliding member including the resin composition.

<Liquid crystal polyester resin>

The liquid crystal polyester resin is not particularly limited as long as it is a polyester resin that exhibits liquid crystallinity in a molten state. The liquid crystal polyester resin is preferably a resin that melts at a temperature of 450°C or lower.

A flow starting temperature of the liquid crystal polyester resin is preferably 250°C or higher, more preferably 270°C or higher, and still more preferably 280°C or higher.

In addition, the flow starting temperature of the liquid crystal polyester resin is preferably 400°C or lower, more preferably 360°C or lower, and still more preferably 340°C or lower.

For example, the flow starting temperature of the liquid crystal polyester resin is preferably 250°C or higher and 400°C or lower, more preferably 270°C or higher and 360°C or lower, and still more preferably 280°C or higher and 340°C or lower.

In the present description, the flow starting temperature of the liquid crystal polyester resin is a temperature at which the liquid crystal polyester resin has a viscosity of 4,800 Pa·s (48,000 poise) when melted under a load of 9.8 MPa (100 kg/cm²) using a flow tester while raising a temperature at a rate of 4°C/min and extruded from a nozzle with an inner diameter of 1 mm and a length of 10 mm.

The liquid crystal polyester resin is preferably a wholly aromatic liquid crystal polyester having a single repeating unit derived from an aromatic compound.

It is to be noted that the term "derived" as used herein means that in polymerization of a raw material monomer, a chemical structure of a functional group that contributes to polymerization is changed, while other chemical structures remain unchanged. The term "derived" herein is a concept also encompassing a case derived from a polymerizable derivative of the raw material monomer.

Examples of polymerizable derivatives of compounds having a carboxy group, such as an aromatic hydroxycarboxylic acid and an aromatic dicarboxylic acid, include an ester in which the carboxy group is converted to an alkoxycarbonyl group or an aryloxycarbonyl group; an acid halide in which the carboxy group is converted to a haloformyl group; and an acid anhydride in which the carboxy group is converted to an acyloxycarbonyl group.

An example of polymerizable derivatives of compounds having a hydroxy group, such as an aromatic hydroxycarboxylic acid, an aromatic diol, and an aromatic hydroxyamine, includes an acylated compound in which the hydroxy group is acylated and converted to an acyloxyl group.

An example of polymerizable derivatives of compounds having an amino group, such as an aromatic hydroxyamine and an aromatic diamine, includes an acylated compound in which the amino group is acylated and converted to an acylamino group.

The liquid crystal polyester resin preferably has a repeating unit represented by the following formula (1) (hereinafter also referred to as a "repeating unit (1)"), and more preferably has the repeating unit (1), a repeating unit represented by the following formula (2) (hereinafter also referred to as a "repeating unit (2)"), and a repeating unit represented by the following formula (3) (hereinafter also referred to as a "repeating unit (3)").

$$(1) \quad \text{-O-Ar}^1\text{-CO-}$$

$$(2) \quad \text{-CO-Ar}^2\text{-CO-}$$

$$(3) \quad \text{-X-Ar}^3\text{-Y-}$$

wherein $Ar^1$ represents a phenylene group, a naphthylene group, or a biphenylylene group; $Ar^2$ and $Ar^3$ each independently represents a phenylene group, a naphthylene group, a biphenylylene group, or a group represented by the following formula (4); X and Y each independently represents an oxygen atom or an imino group (-NH-); and one or more hydrogen atoms in the group represented by $Ar^1$, $Ar^2$, or $Ar^3$ are each independently optionally substituted with a halogen atom, an alkyl group having 1 to 10 carbon atoms, or an aryl group having 6 to 20 carbon atoms.

$$(4) \quad \text{-Ar}^4\text{-Z-Ar}^5\text{-}$$

wherein $Ar^4$ and $Ar^5$ each independently represents a phenylene group or a naphthylene group, Z represents an oxygen atom, a sulfur atom, a carbonyl group, a sulfonyl group, or an alkylidene group having 1 to 10 carbon atoms; and one or more hydrogen atoms in the group represented by $Ar^4$ or $Ar^5$ are each independently optionally substituted with a halogen atom, an alkyl group having 1 to 10 carbon atoms, or an aryl group having 6 to 20 carbon atoms.

Examples of the halogen atom, with which the hydrogen atom in $Ar^1$, $Ar^2$, $Ar^3$, $Ar^4$, or $Ar^5$ can be substituted include a fluorine atom, a chlorine atom, a bromine atom, and an iodine atom.

The alkyl group, with which the hydrogen atom in $Ar^1$, $Ar^2$, $Ar^3$, $Ar^4$, or $Ar^5$ can be substituted is an alkyl group having 1 to 10 carbon atoms and examples thereof include a methyl group, an ethyl group, a n-propyl group, an isopropyl group, a n-butyl group, an isobutyl group, an s-butyl group, a t-butyl group, a n-hexyl group, a 2-ethylhexyl group, a n-octyl group, or a n-decyl group. The alkyl group may be linear or branched.

The aryl group, with which the hydrogen atom in $Ar^1$, $Ar^2$, $Ar^3$, $Ar^4$, or $Ar^5$ can be substituted is an aryl group having 6 to 20 carbon atoms and examples thereof include a phenyl group, an o-tolyl group, a m-tolyl group, a p-tolyl group, a 1-naphthyl group, or a 2-naphthyl group. The aryl group may be a monocyclic or fused ring system. In addition, the aryl group may also be a group in which a hydrogen atom on the aromatic ring is substituted with an alkyl group, such as a tolyl group.

When the hydrogen atom of $Ar^1$, $Ar^2$, $Ar^3$, $Ar^4$, or $Ar^5$ is substituted with the aforementioned groups, the number of substituents is preferably 1 or 2 and more preferably 1.

The alkylidene group in Z in formula (4) is an alkylidene group having 1 to 10 carbon atoms and examples thereof include a methylene group, an ethylidene group, an isopropylidene group, a n-butylidene group, or a 2-ethylhexylidene group.

The repeating unit (1) is preferably a repeating unit in which $Ar^1$ is a 1,4-phenylene group or a 2,6-naphthylene group.

The repeating unit (2) is preferably a repeating unit in which $Ar^2$ is a 1,4-phenylene group, a repeating unit in which $Ar^2$ is a 1,3-phenylene group, a repeating unit in which $Ar^2$ is a 2,6-naphthylene group, a repeating unit in which $Ar^2$ is a 2,7-naphthylene group, a repeating unit in which $Ar^2$ is a 4,4'-biphenylylene group, or a repeating unit in which $Ar^2$ is a diphenylether-4,4'-diyl group and is more preferably a repeating unit in which $Ar^2$ is a 1,4-phenylene group, a 1,3-phenylene group, or a 2,6-naphthylene group.

The repeating unit (3) is preferably a repeating unit in which $Ar^3$ is a 1,4-phenylene group or a 4,4'-biphenylylene group.

The repeating unit (3) having a repeating unit in which X and Y are each an oxygen atom increases the likelihood of reducing the melt viscosity of the liquid crystal polyester resin, which is preferred, and the repeating unit (3) having the single repeating unit in which X and Y are each an oxygen atom is more preferred.

More specifically, the liquid crystal polyester resin having the repeating units (1) to (3) described above more preferably has a repeating unit represented by the following formula (11) (hereinafter also referred to as a "repeating unit (11)"), a repeating unit represented by the following formula (12) (hereinafter also referred to as a "repeating unit (12)"), and a repeating unit represented by the following formula (13) (hereinafter also referred to as a "repeating unit (13)"):

(11)        $-O-Ar^{11}-CO-$

(12)        $-CO-Ar^{12}-CO-$

(13)        $-O-Ar^{13}-O-$

wherein $Ar^{11}$ represents a 2,6-naphthylene group or a 1,4-phenylene group; $Ar^{12}$ represents a 2,6-naphthylene group, a 2,7-naphthylene group, a 1,4-phenylene group, a 1,3-phenylene group, a 4,4'-biphenylylene group, or a diphenylether-4,4'-diyl group; $Ar^{13}$ represents a 1,4-phenylene group or a 4,4'-biphenylylene group; and one or more hydrogen atoms in the group represented by $Ar^{11}$, $Ar^{12}$, or $Ar^{13}$ are each independently optionally substituted with a halogen atom, an alkyl group having 1 to 10 carbon atoms, or an aryl group having 6 to 20 carbon atoms.

An example of a preferred liquid crystal polyester resin having the repeating units (11) to (13) described above includes a liquid crystal polyester resin having the repeating unit (11) in which $Ar^{11}$ is a 1,4-phenylene group, the repeating unit (12) in which $Ar^{12}$ is a 1,4-phenylene group, the repeating unit (12) in which $Ar^{12}$ is a 1,3-phenylene group, and the repeating unit (13) in which $Ar^{13}$ is a 4,4'-biphenylylene group.

The number of the repeating units (1) is preferably 30% or more and 80% or less, more preferably 40% or more and 70% or less, and still more preferably 45% or more and 70% or less, based on the total number of all the repeating units (100%) constituting the liquid crystal polyester resin (hereinafter referred to as the "total number of all repeating units").

The number of the repeating units (2) is preferably 10% or more and 35% or less, more preferably 15% or more and 30% or less, and still more preferably 15% or more and 27.5% or less, based on the total number of all repeating units.

The number of the repeating units (3) is more preferably 10% or more and 35% or less, more preferably 15% or more and 30% or less, and still more preferably 15% or more and 27.5% or less, based on the total number of all repeating units.

For example, the number of the repeating units (1) in the liquid crystal polyester resin having repeating units (1) to (3) is preferably 30% or more and 80% or less based on the total number of all repeating units, and the number of the repeating units (2) and the number of the repeating units (3) are both preferably 10% or more and 35% or less based on the total number of all repeating units.

In addition, the number of the repeating units (1) in the liquid crystal polyester resin is 40% or more and 70% or less based on the total number of all repeating units, and the number of the repeating units (2) and the number of the repeating units (3) are both more preferably 15% or more and 30% or less based on the total number of all repeating units.

Furthermore, the number of the repeating units (1) in the liquid crystal polyester resin is 45% or more and 70% or less based on the total number of all repeating units, and the number of the repeating units (2) and the number of the repeating units (3) are both particularly preferably 15% or more and 27.5% or less based on the total number of all repeating units.

The ratio of the content of the repeating unit (2) to the content of the repeating unit (3), which is represented as [the number of the repeating units (2)]/[the number of the repeating units (3)], is preferably 0.9/1 to 1/0.9, more preferably 0.95/1 to 1/0.95, and still more preferably 0.98/1 to 1/0.98.

It is to be noted that the liquid crystal polyester resin may have two or more of each of the repeating unit (1), repeating unit (2), and repeating unit (3). The liquid crystal polyester resin may also have a repeating unit other than the repeating unit (1), repeating unit (2), and repeating unit (3), but the number of the other units is preferably 10% or less and more preferably 5% or less, based on the total number of all repeating units.

In the liquid crystal polyester resin having the repeating unit (1), repeating unit (2), and repeating unit (3), the sum of the content of the repeating unit (1) (the number of the repeating units (1)), the content of the repeating unit (2) (the number of the repeating units (2)), and the content of the repeating unit (3) (the number of the repeating units (3)) does not exceed 100% based on the total number of all repeating units.

In the present description, the number of each repeating unit constituting the liquid crystal polyester resin is determined by the analytical method described in Japanese Patent Laid-Open No. 2000-19168.

Specifically, the liquid crystal polyester resin is reacted with a lower alcohol in a supercritical state and depolymerized, and the depolymerized product (the monomer from which each repeating unit is derived) is then quantified by liquid chromatography, allowing the number of each repeating unit based on the total number of repeating units to be calculated.

The resin composition may include one liquid crystal polyester, or two or more liquid crystal polyesters.

The liquid crystal polyester resin can be produced by melt polymerization of raw material monomers corresponding to the repeating units constituting the liquid crystal polyester resin followed by solid-state polymerization of the resulting polymer. For example, as disclosed in Japanese Patent No. 6,439,027, the liquid crystal polyester resin can be produced by a production method including the following acylation step and polymerization step.

In the acylation step, a phenolic hydroxy group of the raw material monomer is acylated with a fatty acid anhydride (for example, acetic anhydride) to obtain an acylated product. The acylation reaction in the acylation step is preferably carried out at a temperature range of 130°C to 180°C for 30 minutes to 20 hours and more preferably at 140°C to 160°C for 1 to 5 hours.

In the polymerization step, an acyl group of the acylated product is polymerized with a carboxy group of an acylated product of an aromatic dicarboxylic acid or aromatic hydroxycarboxylic acid so that a transesterification reaction takes place to produce a liquid crystal polyester resin. The transesterification reaction in the polymerization step is preferably carried out while raising a temperature from 130°C to 400°C at a rate of temperature rise of 0.1 to 50°C/min and more preferably carried out while raising a temperature from 150°C to 350°C at a rate of temperature rise of 0.3 to 5°C/min.

<Fluororesin>

The term "fluororesin" as used herein refers to a resin including a fluorine atom in its molecule, and an example thereof includes a polymer having a structural unit including a fluorine atom.

Examples of the fluororesin contained in the resin composition of the present embodiment include polytetrafluoroethylene (PTFE), a tetrafluoroethylene-hexafluoropropylene copolymer (FEP), polychlorotrifluoroethylene (PCTFE), an ethylene-tetrafluoroethylene copolymer, an ethylene-chlorotrifluoroethylene copolymer, polyvinylidene difluoride (PVDF), and a tetrafluoroethylene-perfluoroalkyl vinyl ether copolymer (perfluoroalkoxyalkane, PFA).

Among these, the fluororesin is preferably polytetrafluoroethylene (PTFE) from the viewpoints of its miscibility with the liquid crystal polyester resin and the excellent sliding properties and heat resistance of a molded article.

The resin composition may include one fluororesin or two or more fluororesins.

<Oxide of metal element belonging to Group 2 elements in long form of periodic table>

The resin composition of the present embodiment contains an oxide of a metal element belonging to Group 2 elements in the long form of the periodic table. The metal elements belonging to Group 2 elements include beryllium, magnesium, calcium, strontium, barium, and radium. An oxide of magnesium, calcium, strontium, barium, or radium, which can react with water, is preferred.

The metal element belonging to Group 2 elements in the present embodiment is preferably at least one element selected from the group consisting of calcium and magnesium and more preferably calcium in terms of further inhibiting corrosive gas from being generated from a molded article. The oxide contained in the resin composition of the present embodiment is preferably at least one element selected from the group consisting of calcium oxide and magnesium oxide and more preferably calcium oxide.

The resin composition may include one or more of these oxides.

The content of the liquid crystal polyester resin based on 100% by mass of the total mass of the resin composition of the present embodiment may be more than 57% by mass and less than 89.99% by mass, more than 57% by mass and less than 89.9% by mass, more than 62% by mass and less than 84.9% by mass, 67.5% by mass or more and 79.5% by mass or less, or 72.5% by mass or more and less than 75.0% by mass.

The content of the fluororesin based on 100% by mass of the total mass of the resin composition of the present embodiment may be 10% by mass or more and 40% by mass or less, 15% by mass or more and 35% by mass or less, or 20% by mass or more and 30% by mass or less.

The content of the oxide of the metal element belonging to Group 2 elements based on 100% by mass of the total mass of the resin composition of the present embodiment, is preferably more than 0.01% by mass and less than 3.0% by mass, more preferably 0.1% by mass or more and less than 3.0% by mass, still more preferably more than 0.1% by mass and less than 3.0% by mass, even still more preferably more than 0.1% by mass and 2.5% by mass or less, and particularly preferably 0.5% by mass or more and 2.5% by mass or less.

When the content of the oxide of the metal element belonging to Group 2 elements is in the lower limit value or more in the preferred range described above, the generation of corrosive gas from a molded article is more likely to be inhibited, and when the content is in the upper limit value or less in the preferred range described above, on the other hand, a molded article is more likely to maintain its abrasion resistance.

Furthermore, the content of the oxide of the metal element belonging to Group 2 elements based on 100% by mass of the total mass of the resin composition of the present embodiment, is preferably 0.1% by mass or more and 2% by mass or less and particularly preferably 0.5% by mass or more and 2% by mass or less.

When the content of the oxide of the metal element belonging to Group 2 elements is the lower limit value or more of the preferred range described above, the generation of corrosive gas from a molded article is more likely to be inhibited, and when the content is the upper limit value or less of the preferred range described above, on the other hand, a molded article is more likely to maintain its abrasion resistance under elevated temperature and high humidity conditions, and the resin composition is less likely to change in its color.

The content of the metal element belonging to Group 2 elements based on 100% by mass of the total mass of the resin composition of the present embodiment, is 0.01% by mass or more and 2.0% by mass or less, preferably 0.05% by mass or more and 2.0% by mass or less, more preferably 0.1% by mass or more and 2.0% by mass or less, and still more preferably 0.3% by mass or more and 1.8% by mass or less.

When the content of the metal element belonging to Group 2 elements is the lower limit value or more of the preferred range described above, the generation of corrosive gas from a molded article is more likely to be inhibited, and when the content is the upper limit value or less of the preferred range described above, on the other hand, a molded article is more likely to maintain its abrasion resistance.

Furthermore, the content of the metal element belonging to Group 2 elements based on 100% by mass of the total mass of the resin composition of the present embodiment is preferably 0.05% by mass or more and 1.5% by mass or less and particularly preferably 0.3% by mass or more and 1.5% by mass or less.

When the content of the metal element belonging to Group 2 elements is the lower limit value or more of the preferred range described above, the generation of corrosive gas from a molded article is more likely to be inhibited, and when the content is the upper limit value or less of the preferred range described above, on the other hand, a molded article is more likely to maintain its abrasion resistance under elevated temperature and high humidity conditions, and the resin composition is less likely to change in its appearance.

In the present description, the content of the metal element belonging to Group 2 elements based on 100% by mass of the total mass of the resin composition is defined as the value measured by the following measurement method.

[Method for measuring content of metal element belonging to Group 2 elements in resin composition]

The resin composition is heated, for example, at a temperature of 500 to 700°C to remove a resin component, and the content of a metal element in the resulting residue can then be measured using a publicly known method. An example of a preferred method for measuring the content of the metal element includes inductively coupled plasma mass spectrometry (ICP-MS), which allows for a highly sensitive measurement.

In the resin composition of the present embodiment, a content of the fluororesin based on 100 parts by mass of the liquid crystal polyester resin may be 10 parts by mass or more and 50 parts by mass or less, 20 parts by mass or more and 45 parts by mass or less, or 30 parts by mass or more and 40 parts by mass or less.

In the resin composition of the present embodiment, the content of the oxide of the metal element belonging to Group 2 elements based on 100 parts by mass of the liquid crystal polyester resin may be 0.1 parts by mass or more and 4 parts by mass or less, 0.2 parts by mass or more and 3.5 parts by mass or less, or 0.5 parts by mass or more and 3 parts by mass or less.

In the resin composition of the present embodiment, the content of the metal element belonging to Group 2 elements based on 100 parts by mass of the liquid crystal polyester resin may be 0.05 parts by mass or more and less than 3 parts by mass, 0.2 parts by mass or more and 2.5 parts by mass or less, or 0.4 parts by mass or more and 2 parts by mass or less.

When the content of the metal element belonging to Group 2 elements is in the lower limit value or more of the preferred range described above, the generation of corrosive gas from a molded article is more likely to be inhibited, and when the content is the upper limit value or less of the preferred range described above, on the other hand, the resin composition is less likely to change in its color under elevated temperature and high humidity conditions.

In the resin composition of the present embodiment, the content of the oxide of the metal element belonging to Group 2 elements based on 100 parts by mass of the fluororesin may be 0.3 parts by mass or more and less than 12 parts by mass, 0.5 parts by mass or more and 11 parts by mass or less, or 1 part by mass or more and 10 parts by mass or less.

When the content of the oxide of the metal element belonging to Group 2 elements is in the lower limit value or more of the preferred range described above, the generation of corrosive gas from a molded article is more likely to be inhibited, and when the content is the upper limit value or less of the preferred range described above, on the other hand, a molded article increases the likelihood of maintaining its abrasion resistance.

Furthermore, in the resin composition of the present embodiment, the content of the oxide of the metal element belonging to Group 2 elements based on 100 parts by mass of the fluororesin is preferably 0.4 parts by mass or more and 9 parts by mass or less and particularly preferably 1.5 parts by mass or more and 9 parts by mass or less. When the content of the oxide of the metal element belonging to Group 2 elements is the lower limit value or more of the preferred range described above, the generation of corrosive gas from a molded article is more likely to be inhibited, and when the content is in the upper limit value or less of the preferred range described above, on the other hand, a molded article is more likely to maintain its abrasion resistance under elevated temperature and high humidity conditions, and the resin composition is less likely to change in its appearance.

In the resin composition of the present embodiment, the content of the metal element belonging to Group 2 elements based on 100 parts by mass of the fluororesin is preferably 0.04 parts by mass or more and 8 parts by mass or less, more preferably 0.2 parts by mass or more and 8.5 parts by mass or less, still more preferably 0.4 parts by mass or more and 8 parts by mass or less, and particularly preferably 1 part by mass or more and 7.5 parts by mass or less.

When the content of the metal element belonging to Group 2 elements is the lower limit value or more of the preferred range described above, the generation of corrosive gas from a molded article is more likely to be inhibited, and when the content is the upper limit value or less of the preferred range described above, on the other hand, a molded article is more likely to maintain its abrasion resistance.

Furthermore, in the resin composition of the present embodiment, the content of the metal element belonging to Group 2 elements based on 100 parts by mass of the fluororesin is preferably 0.2 parts by mass or more and 6 parts by mass or less and particularly preferably 1.4 parts by mass or more and 6 parts by mass or less.

When the content of the metal element belonging to Group 2 elements is the lower limit value or more of the preferred range described above, the generation of corrosive gas from a molded article is more likely to be inhibited, and when the content is the upper limit value of the preferred range described above, on the other hand, a molded article is more likely to maintain its abrasion resistance under elevated temperature and high humidity conditions, and the resin composition is less likely to change in its appearance.

In the resin composition of the present embodiment, the respective contents of the liquid crystal polyester resin, fluororesin, and an oxide of the metal element belonging to Group 2 elements in the long form of the periodic table can be adjusted to the aforementioned contents obtained by adjusting the amounts of respective raw materials compounded upon preparation of the resin composition.

In the resin composition of the present embodiment, the content of the metal element belonging to Group 2 elements can be controlled to the aforementioned preferred content by adjusting the amount of the corresponding oxide of the metal element belonging to Group 2 elements upon preparation of the resin composition.

<Fibrous filler>

The resin composition of the present embodiment is free of a fibrous filler.

The phrase "free of a fibrous filler" as used herein means that the content of the fibrous filler is 0% by mass or more and 1% by mass or less, preferably 0% by mass, based on 100% by mass of the total mass of the resin composition.

The fibrous filler may be an inorganic filler or an organic filler.

Examples of the fibrous inorganic filler include a glass fiber, a modified cross-section glass fiber, a carbon fiber, a silica fiber, an alumina fiber, a ceramic fiber, a metal fiber, a silicon carbide fiber, and whiskers.

Examples of the fibrous organic filler include a polyester fiber, a para- or meta-aramid fiber, and a polyparaphenylenebenzobisoxazole (PBO) fiber.

<Other components>

The resin composition of the present embodiment may optionally contain other components in addition to the liquid crystal polyester resin, fluororesin, and an oxide of the metal element belonging to Group 2 elements in the long form of the periodic table described above.

Examples of the other component include a filler other than the fibrous filler, other resins other than the liquid crystal polyester resin and fluororesin, a flame retardant, a conduction imparting agent, a crystal nucleating agent, an ultraviolet ray absorber, an antioxidant, a vibration damping material, an antibacterial agent, an insect repellent, a deodorizer, a color inhibitor, a heat stabilizer, a release agent, an antistatic agent, a plasticizer, a lubricant, a dye, a foaming agent, a foam control agent, a viscosity modifier, and a surfactant.

<<Filler>>

Examples of the filler other than the fibrous filler include a platy filler, a spherical filler, and a powder filler.
Examples of the platy filler include talc, mica, a glass flake, and graphite. The platy filler may be surface-treated or untreated. Examples of mica include natural mica such as muscovite, phlogopite, fluorophlogopite, and tetrasilicic mica, as well as artificially produced synthetic mica.
Examples of the spherical filler include a glass bead and a glass balloon.
Examples of the powder filler include calcium carbonate, dolomite, clay barium sulfate, titanium oxide, carbon black, conductive carbon, and fine silica.
The resin composition of the present embodiment may contain a filler other than the fibrous filler, but it is preferably free of the filler other than the fibrous filler from the viewpoint of making it less likely for a mating material with which the sliding member comes into contact to be damaged.
The phrase "free of a filler other than the fibrous filler" as used herein means that the content of the filler is 0% by mass or more and 1% by mass or less, based on 100% by mass of the total mass of the resin composition.

<<Other resins other than liquid crystal polyester resin and fluororesin>>

Examples of the other resin include a polyolefin resin, a vinyl-based resin, a polystyrene-based resin, a polyamide-based resin, a polyester-based resin, a polysulfone-based resin, polyphenylene sulfide, polyether ketone, polycarbonate, polyphenylene ether, and a polyimide resin.
In the resin composition of the present embodiment, the content of the other resin other than the liquid crystal polyester resin and fluororesin based on 100% by mass of the total mass of the resin composition, is preferably 10% by mass or less, more preferably 5% by mass or less, and still more preferably 1% by mass or less, and particularly preferably, the resin composition of the present embodiment is free of the other resin.
In the resin composition of the present embodiment, when the content of the metal element belonging to Group 2 elements is 0.01% by mass or more based on 100% by mass of the total mass of the resin composition, corrosive gas is inhibited from being generated from the molded article. In addition, the content of the metal element belonging to Group 2 elements being 2.0% by mass or less, can thereby provide a molded article that maintains its abrasion resistance in particular under elevated temperature and high humidity conditions.
The corrosive gas generated from a molded article is considered to be generated due to thermal decomposition of the resin composition upon molding processing under the condition of temperature exceeding 300°C and has been confirmed to be mainly gases such as acetic acid, phenol, and an aromatic ester.
It is conjectured that the oxide of the metal element belonging to Group 2 elements in the resin composition acts as a basic compound and exhibits the effect of primarily capturing acetic acid, thereby inhibiting generation of corrosive gas from a molded article.
The presence of a hydroxide of the metal element belonging to Group 2 elements in the resin composition may affect the stability of a structure constituting the molded article, resulting in deteriorated abrasion resistance and changes in color, so that the content of the hydroxide is preferably minimal.
The content of the hydroxide of the metal element belonging to Group 2 elements is preferably 0.5% by mass or less, more preferably 0.4% by mass or less, and still more preferably 0.3% by mass or less, based on 100% by mass of the total mass of the resin composition. For example, the content of the hydroxide of the metal element belonging to Group 2 elements may be 0% by mass or more and 0.4% by mass or less, or 0.1% by mass or more and 0.3% by mass or less, based on 100% by mass of the total mass of the resin composition.
In addition, controlling the upper limit of the content of the metal element belonging to Group 2 elements in the resin composition of the present embodiment allows a color difference $\Delta E$ of the resin composition to be minimized under elevated temperature and high humidity conditions, making it less likely to change a color of the resin composition.

(Molded article)

One embodiment of the molded article is a molded article including the resin composition of the aforementioned embodiment.
The molded article of the present embodiment can be obtained by a publicly known molding method using the resin composition. The molding method using the resin composition of the aforementioned embodiment is preferably a melt molding method, examples of which include extrusion molding methods such as injection molding, a T-die method and an inflation method, compression molding, blow molding, vacuum molding, and press molding. Of these, the injection molding is preferred.

For example, a molded article can be obtained by melting the resin composition of the present embodiment using a publicly known injection molding machine and injecting the molten resin composition into a mold.

Examples of the publicly known injection molding machine include a TR450EH3 manufactured by Sodick Co., Ltd. and hydraulic horizontal molding machines PS40E5ASE and ES400 manufactured by Nissei Plastic Industrial Co., Ltd.

Temperature conditions for injection molding are those under which a cylinder temperature of an injection molding machine is preferably set to a temperature of 10 to 80°C higher than the flow starting temperature of the resin composition to be used.

A mold temperature is preferably set in the range from 25°C to 180°C, taking into account the time required for cooling the resin composition and its productivity.

Other injection conditions, such as a screw rotation speed, a back pressure, an injection rate, a holding pressure, and a holding time, can be appropriately adjusted.

The molded article of the present embodiment using the aforementioned resin composition thereby maintains its abrasion resistance in an elevated temperature environment and also inhibits the generation of corrosive gas. The molded article of the present embodiment is useful for, for example, a damper ring, an oil seal, and a piston ring.

(Sliding member)

One embodiment of the sliding member is a sliding member including the molded article of the aforementioned embodiment.

The sliding member of the present embodiment is suitable for use in, for example, dampers and bearings, and is particularly suitable as an automotive part from the viewpoint that it maintains its abrasion resistance and inhibits the generation of corrosive gas.

Examples

The present disclosure will be described below by way of Examples, but the present disclosure is not limited to these Examples.

[Measurement of content of metal element belonging to Group 2 elements in resin composition]

The content of the metal element in the resin composition was determined by heating the resin composition at 600°C and measuring the resulting residue using inductively coupled plasma mass spectrometry (ICP-MS) .

[Measurement of flow starting temperature of liquid crystal polyester resin and pellet]

The liquid crystal polyester resin and pelletized resin composition were each used as samples.

First, approximately 2 g of sample was placed into a cylinder equipped with a die having a nozzle with an inner diameter of 1 mm and a length of 10 mm using a flow tester (Model CFT-500 manufactured by Shimadzu Corporation).

Next, the sample was melted under a load of 9.8 MPa (100 kg/cm$^2$) while raising a temperature at a rate of 4°C/min and extruded from the nozzle, and a temperature at which the sample had a viscosity of 4,800 Pa·s (48,000 poise) was measured and defined as the flow starting temperature of the sample.

[Measurement of brightness and color of pellet]

Using a color difference meter (CM-3600A manufactured by KONICA MINOLTA, INC.) with a D65 illumination light reception optical system, a C light source, an observation field of view of 10°, and a measurement diameter of 25.4 mm, the pellet was measured for brightness (L*: SCE method) and color (a*, b*: SCE method) according to the L*a*b* color system without UV protection.

[Measurement of amount of acetic acid generated from pellet]

4 g of pellets of the liquid crystal polyester resin composition was weighed out, washed with distilled water, and placed in a vacuum-dried vial of 25 cc. The vial was sealed with a packing made of polytetrafluoroethylene and then heated in a hot air oven set to 150°C for 20 hours.

The sealed vial was installed in a headspace gas chromatograph (GC-15A/HSS-3A) manufactured by Shimadzu Corporation. After having maintained the vial at 150°C for one hour, the vial was injected into a column with a length of 15 m, containing DBWAX (manufactured by J&W Scientific) as a packing material. Simultaneously with the injection of the vial, a column temperature was increased from 80°C at 2°C/min, and gas was continued to be detected with a detector up to a retention time of 25 minutes. An FID was used for detection, and helium was used as the carrier gas.

From the detected gas peak, the amount of acetic acid in the gas generated from the pellets was calculated based on the peak at the retention time of acetic acid, which had been preliminarily confirmed using a standard substance as reference.

[Measurement of surface roughness Ra and amount of wear on molded article]

The surface roughness Ra of a molded article, as defined by JIS B0601-2001, was measured using a 3D scanner-type coordinate measuring machine (manufactured by KEYENCE CORPORATION). Measurements were performed at least at four different points on each molded article, and their arithmetic mean value was calculated.

For the molded article, the surface roughness Ra of which was measured, the amount of wear on each molded article was determined using a Suzuki-type friction and wear tester (EFM-3-H-S manufactured by A&D Company, Limited) (ring-on-disc) in a sliding test described below.

Sliding test:

A molded article was coated with silicone oil with a kinematic viscosity of 450 to 600 Pa·s at 25°C and a metal ring was placed on top of the molded article, which was then rotated at 123 rpm with a load of 105 N applied to the metal ring in a thermostatic chamber at 120°C for 24 hours.

The specific test conditions were as follows:

Metal ring: SUS304 (Ra: 0.02 mm or less)
Rotation speed of molded article: 0.15 m/s
Measurement temperature: 120°C
Contact area between the metal ring and the molded article: 2.0 cm$^2$

After the sliding test, the molded article was removed and cooled to room temperature. After cooling, the silicone oil adhering to a surface of the molded article was wiped off, and the maximum surface roughness Rt, as defined by JIS B0601-2001, of a sliding surface was measured using a 3D scanner-type coordinate measuring machine (manufactured by KEYENCE Corporation). Measurements were performed at least at four different points on each molded article, and their arithmetic mean value was calculated, and the amount of wear on the molded article was calculated using the following formula:

The amount of wear on molded article (m$^3$/m) = {Maximum surface roughness Rt ($\mu$m) $\times$ 2.0 (cm$^2$) $\times$ 10$^{-6}$ (m/$\mu$m) $\times$ 10$^{-4}$ (m$^2$/cm$^2$)}/{0.15 (m/s) $\times$ 24 (h) $\times$ 3, 600 (s/h)})

- In the sliding test described above, the more the maximum surface roughness after the test, the more the amount of wear, and therefore, the maximum surface roughness Rt ($\mu$m) is used as the measure of the amount of wear on the molded article.
- The value 2.0 (cm$^2$) in the numerator of the formula above refers to a contact area between the metal ring and the molded article, and the numerator which was obtained by multiplying the contact area by the maximum surface roughness Rt, represents the actual volume of the molded article that has been worn away.
- The forms "$\times$ 10$^{-6}$" and "$\times$ 10$^{-4}$" in the numerator of the formula above are multiplications in terms of the unit conversion.
- The amount of wear on the molded article depends on a test distance (i.e., the total length over which the molded article comes into contact with the metal ring while being rotated), and it is therefore normalized by being divided by that test distance in the formula above.
- In the sliding test, the molded article was rotated continuously at a rotation speed of 0.15 (m/s) for 24 hours, and the denominator in the formula above means the total length of contact between the molded article and the metal ring while being continuously rotated for 24 hours.

The amount of wear on the molded article is a value which is an index of sliding properties. A smaller value thereof means that the molded article has favorable sliding properties.

- Liquid crystal polyester resin used Production of liquid crystal polyester resin (LCP):
  A reactor equipped with a stirrer, a torque meter, a nitrogen gas inlet tube, a thermometer, and a reflux condenser was charged with 994.5 g (7.2 mol) of p-hydroxybenzoic acid, 299.0 g (1.8 mol) of terephthalic acid, 99.7 g (0.6 mol) of isophthalic acid, 446.9 g (2.4 mol) of 4,4'-dihydroxybiphenyl, and 1,347.6 g (13.2 mol) of acetic anhydride, and after the gas inside the reactor was replaced with nitrogen gas, 0.18 g of 1-methylimidazole was added. The mixture was raised from room temperature to 150°C over 30 minutes while being stirred under a nitrogen gas stream and then refluxed at 150°C for 30 minutes. Next, 2.4 g of 1-methylimidazole was added, and the mixture was raised from 150°C to 320°C over 2 hours and 50 minutes while distilling off a byproduct acetic acid and unreacted acetic anhydride. When an increase in torque was observed, the contents were removed from the reactor and cooled to room temperature. The resulting solid was pulverized in a pulverizer, and the solid was raised from room temperature to 250°C over 1 hour and then from 250°C to 295°C over 5 hours under a nitrogen gas atmosphere and held at 295°C for 3 hours to undergo solid-state polymerization. The mixture was then cooled to yield a powdered liquid crystal polyester resin (LCP) .

The flow starting temperature of the resulting liquid crystal polyester resin (LCP) was 327°C.

- Fluororesin used
  Polytetrafluoroethylene (trade name "Dyneon (R) TF9205" manufactured by 3M Japan Limited)
- Oxide of metal element belonging to Group 2 elements in long form of periodic table
  Calcium oxide (trade name "VESTA PP," particle size 12 μm, manufactured by Inoue Lime Industry Co., Ltd.), and magnesium oxide (trade name "Kyowamag 150," particle size 6.9 μm, manufactured by Kyowa Chemical Industry Co., Ltd.)
- Hydroxide of metal element
  Calcium hydroxide (manufactured by FUJIFILM Wako Pure Chemical Industries Co., Ltd.)

<Production of pelletized resin composition> (Examples 1 to 7 and Comparative Examples 1 to 4)

A liquid crystal polyester resin composition mixed with each component in their proportions shown in Table 1 was fed into a co-rotating twin-screw extruder ("PCM-30" manufactured by IKEGAI CO., LTD.) with a screw diameter of 30 mm, and the resin composition was melt-kneaded and pelletized to obtain a pelletized resin composition for each Example.

<<Measurement of pelletized resin composition>>

The flow starting temperature (°C) and the amount of corrosive gas generated (ppm) of the pelletized resin composition immediately after production for each Example were measured. The measurement results are shown in Table 1.
In addition, the brightness and chromaticity of the pelletized resin composition immediately after production for each Example were measured.
Next, approximately 10 g of the pelletized resin composition immediately after production for each Example was stored in a constant temperature and humidity chamber (PJ-2L, manufactured by ESPEC Corp.) at a temperature of 40°C and a relative humidity of 90% RH for 500 hours. Thereafter, for the pelletized resin composition for each Example, the flow starting temperature (°C) and the brightness and chromaticity of the pelletized resin composition for each Example were measured, as in the case before storage.
The amount of corrosive gas generated was evaluated by measuring the amount of acetic acid generated from the pelletized resin composition. The color change of the pelletized resin composition was evaluated by calculating a color difference ΔE (SCE method) using the measurement values before and after storage. The results are shown in Table 1.
The color difference ΔE is defined by the following formula:

$$\Delta E = \{(\Delta L^*)^2 + (\Delta a^*)^2 + (\Delta b^*)^2\}^{1/2}$$

Here, ΔL*, Δa*, and Δb* are the differences in the measured values of L*, a*, and b* before and after storage, respectively.

<Production of molded article>

The pelletized resin composition obtained above for each Example was fed into an injection molding machine ES400 (manufactured by Nissei Plastic Industrial Co., Ltd.) with a cylinder temperature of 340°C, and the pellets were extruded into a mold with a mold temperature of 130°C at an injection rate of 40 mm/s, a screw rotation speed of 100 rpm, a holding pressure of 50 MPa, and a back pressure of 3 MPa to produce an injection-molded test piece having dimensions of 64 mm × 64 mm × 3 mm thickness as a molded article.

<<Evaluation of molded article>>

The surface roughness (Ra) of the molded article fabricated in <Production of molded article> described above was measured immediately after the production. The molded article was then cut into a molded article having dimensions of 35 mm × 35 mm × 3 mm thickness, and the amount of wear on the molded article was measured. The measurement results thereof are shown in Table 1.

The cut molded article was dried at 120°C for 5 hours or longer to remove moisture followed by measurement of the weight of the molded article.

Next, the cut molded article was stored for 500 hours in a constant temperature and humidity chamber (PJ-2L, manufactured by ESPEC Corp.) at a temperature of 40°C and a relative humidity of 90% RH. Thereafter, for the molded article after storage, the surface roughness Ra ($\mu$m) of the molded article and the amount of wear ($m^3$/m) on the molded article were measured, as with those before storage. These results are shown in Table 1.

The weight of each molded product after storage was measured. The water absorption rate (%) of the molded article was then calculated based on the change in weight before and after storage using the following formula. These results are shown in Table 1.

Water absorption rate (%) of molded article = {(weight of molded article after storage - weight of molded article before storage)/(weight of molded article before storage)} × 100

[Table 1]

| | | | Comparative Example 1 | Example 1 | Example 2 | Example 3 | Example 4 | Example 5 | Example 6 | Comparative Example 2 | Comparative Example 3 | Comparative Example 4 | Comparative Example 5 |
|---|---|---|---|---|---|---|---|---|---|---|---|---|---|
| Composition [% by mass] | Crystal polyester resin | LCP | 75.0 | 74.9 | 74.5 | 74.0 | 73.5 | 73.0 | 72.5 | 72.0 | 71.0 | 71.0 | 74.0 |
| | Fluororesin | PTFE | 25.0 | 25.0 | 25.0 | 25.0 | 25.0 | 25.0 | 25.0 | 25.0 | 25.0 | 25.0 | 25.0 |
| | Oxide of metal element | CaO | | 0.1 | 0.5 | 1.0 | 1.5 | 2.0 | 2.5 | 3.0 | 4.0 | 3.52 | |
| | | MgO | | | | | | | | | | | 1.0 |
| | Hydroxide of metal element | $Ca(OH)_2$ | | | | | | | | | | 0.48 | |
| | Metal element | Ca | | 0.071 | 0.36 | 0.71 | 1.1 | 1.4 | 1.8 | 2.1 | 2.9 | 2.8 | |
| | | Mg | | | | | | | | | | | 0.60 |
| | | Sum | 100 | 100 | 100 | 100 | 100 | 100 | 100 | 100 | 100 | 100 | 100 |
| Pellet | Immediately after production | Flow starting temperature (°C) | 316 | 316 | 317 | 317 | 316 | 316 | 316 | 316 | 317 | 314 | 315 |
| | | Amount of corrosive gas generated (ppm) | 16.0 | 1.1 | 0.20 | <0.1 | 0.42 | 0.28 | 0.17 | <0.1 | <0.1 | <0.1 | 8.5 |
| | After storage at 40 °C and 90% RH for 500 hr | Flow starting temperature (°C) | 316 | 316 | 316 | 316 | 315 | 315 | 315 | 315 | 313 | 312 | 316 |
| | | Color difference (ΔE) | 1.4 | 1.2 | 1.2 | 1.7 | 2.5 | 3.9 | 9.7 | 10.6 | 11.6 | 16.3 | 0.7 |

(continued)

| | | | Comparative Example 1 | Example 1 | Example 2 | Example 3 | Example 4 | Example 5 | Example 6 | Comparative Example 2 | Comparative Example 3 | Comparative Example 4 | Comparative Example 5 |
|---|---|---|---|---|---|---|---|---|---|---|---|---|---|
| Molded article | Immediately after production | Surface roughness Ra ($\mu$m) | 0.48 | 0.44 | 0.45 | 0.48 | 0.49 | 0.45 | 0.48 | 0.48 | 0.43 | 0.43 | 0.48 |
| | | Amount of wear ($\times 10^{-14}$ m$^3$/m) | 7.6 | 7.3 | 9.8 | 9.8 | 8.1 | 7.6 | 7.6 | 7.4 | 7.9 | 9.4 | 9.8 |
| | After storage at 40 °C and 90% RH for 500 hr | Water absorption rate (%) | 0.02 | 0.03 | 0.03 | 0.04 | 0.04 | 0.05 | 0.06 | 0.07 | 0.08 | Unmeasured | Unmeasured |
| | | Surface roughness Ra ($\mu$m) | 0.52 | 0.45 | 0.45 | 0.44 | 0.50 | 0.40 | 0.53 | 0.53 | 0.73 | 1.03 | 0.49 |
| | | Amount of wear ($\times 10^{-14}$ m$^3$/m) | 8.9 | 9.5 | 8.9 | 7.7 | 9.8 | 6.2 | 8.1 | 15.2 | 19.3 | 14.2 | 8.6 |

The results shown in Table 1 confirmed that the resin compositions of Examples 1 to 7, in which the content of the metal element belonging to Group 2 elements was 0.01% by mass or more and 2.0% by mass or less based on 100% by mass of the total mass of the resin composition, inhibited the generation of corrosive gas and provided the molded articles that maintained their abrasion resistance under elevated temperature and high humidity conditions.

Furthermore, it was also confirmed that the resin compositions of Examples 1 to 5 and 7, in which the content of the metal element belonging to Group 2 elements was 0.05% by mass or more and 1.5% by mass or less based on 100% by mass of the total mass of the resin composition, exhibited the small color difference ΔE under elevated temperature and high humidity conditions and were less likely to change in its color.

The resin composition of Comparative Example 1, which was free of a metal element belonging to Group 2 elements, resulted in the generation of a large amount of corrosive gas.

The resin compositions of Comparative Examples 2 to 4, in which the content of the metal element belonging to Group 2 elements exceeded 2% by mass based on 100% by mass of the total mass of the resin composition, exhibited the large color difference ΔE under elevated temperature and high humidity conditions, were more likely to change in its color, and resulted in the molded articles with poor abrasion resistance.

Industrial Applicability

The resin composition of the present invention inhibited the generation of corrosive gas, inhibited the change in its appearance even under elevated temperature and high humidity conditions, and provided the molded article that maintains abrasion resistance.

The molded article of the present invention and the sliding member including this molded article inhibits the change in its appearance even under elevated temperature and high humidity conditions and maintains its abrasion resistance.

**Claims**

1. A resin composition that comprises a liquid crystal polyester resin, a fluororesin, and an oxide of a metal element belonging to Group 2 elements in the long form of the periodic table, and is free of a fibrous filler, wherein a content of the metal element belonging to Group 2 elements is 0.01% by mass or more and 2.0% by mass or less, based on 100% by mass of a total mass of the resin composition.

2. The resin composition according to claim 1, wherein the content of the metal element belonging to Group 2 elements is 0.04 parts by mass or more and 8 parts by mass or less, based on 100 parts by mass of the fluororesin.

3. The resin composition according to claim 1 or 2, wherein a content of the oxide of the metal element belonging to Group 2 elements is more than 0.01% by mass and less than 3.0% by mass, based on 100% by mass of the total mass of the resin composition.

4. The resin composition according to claim 1, wherein a content of the fluororesin is 10 parts by mass or more and 50 parts by mass or less, based on 100 parts by mass of the liquid crystal polyester resin.

5. The resin composition according to claim 1, wherein the metal element belonging to Group 2 elements is at least one selected from the group consisting of calcium and magnesium.

6. The resin composition according to claim 5, wherein the metal element belonging to Group 2 elements is calcium.

7. The resin composition according to claim 1, wherein the liquid crystal polyester resin has a repeating unit represented by the following formula (1), a repeating unit represented by the following formula (2), and a repeating unit represented by the following formula (3):

$$(1) \quad \text{-O-Ar}^1\text{-CO-}$$

$$(2) \quad \text{-CO-Ar}^2\text{-CO-}$$

$$(3) \quad \text{-X-Ar}^3\text{-Y-}$$

wherein $Ar^1$ represents a phenylene group, a naphthylene group, or a biphenylylene group; $Ar^2$ and $Ar^3$ each

independently represents a phenylene group, a naphthylene group, a biphenylylene group, or a group represented by the following formula (4); X and Y each independently represents an oxygen atom or an imino group (-NH-); and one or more hydrogen atoms in the group represented by $Ar^1$, $Ar^2$, or $Ar^3$ are each independently optionally substituted with a halogen atom, an alkyl group having 1 to 10 carbon atoms, or an aryl group having 6 to 20 carbon atoms,

(4)        $-Ar^4-Z-Ar^5-$

wherein $Ar^4$ and $Ar^5$ each independently represents a phenylene group or a naphthylene group; Z represents an oxygen atom, a sulfur atom, a carbonyl group, a sulfonyl group, or an alkylidene group having 1 to 10 carbon atoms; and one or more hydrogen atoms in the group represented by $Ar^4$ or $Ar^5$ are each independently optionally substituted with a halogen atom, an alkyl group having 1 to 10 carbon atoms, or an aryl group having 6 to 20 carbon atoms.

8.  A molded article comprising the resin composition according to claim 1.

9.  A sliding member comprising the molded article according to claim 8.

## INTERNATIONAL SEARCH REPORT

| International application No. |
|---|
| **PCT/JP2024/027857** |

| A. | CLASSIFICATION OF SUBJECT MATTER |
|---|---|

*C08L 67/00*(2006.01)i; *C08K 3/22*(2006.01)i; *C08L 27/12*(2006.01)i
FI:  C08L67/00; C08K3/22; C08L27/12

According to International Patent Classification (IPC) or to both national classification and IPC

| B. | FIELDS SEARCHED |
|---|---|

Minimum documentation searched (classification system followed by classification symbols)

C08L67/00; C08K3/22; C08L27/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 9-53003 A (SUMITOMO CHEMICAL CO., LTD.) 25 February 1997 (1997-02-25) claims, paragraphs [0004]-[0005], [0010], [0026], examples | 1-8 |
| Y | | 1-9 |
| Y | JP 2011-178830 A (SUMITOMO CHEMICAL COMPANY, LIMITED) 15 September 2011 (2011-09-15) claims, paragraphs [0006], [0035], [0088], examples | 1-9 |
| A | JP 2013-199625 A (SUMITOMO CHEMICAL COMPANY, LIMITED) 03 October 2013 (2013-10-03) entire text | 1-9 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 September 2024** | **08 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/027857**

| Patent document cited in search report | | | Publication date (day/month/year) | Patent family member(s) | Publication date (day/month/year) |
|---|---|---|---|---|---|
| JP | 9-53003 | A | 25 February 1997 | US 5847039 A claims, column 1, lines 31-50, column 2, lines 30-36, column 6, lines 46-60, examples EP 747422 A2 | |
| JP | 2011-178830 | A | 15 September 2011 | US 2011/0213086 A1 claims, paragraphs [0009], [0044], [0101], examples CN 102241873 A KR 10-2011-0098648 A TW 201137041 A | |
| JP | 2013-199625 | A | 03 October 2013 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023135578 A
- JP H1025402 A
- JP 2000019168 A
- JP 6439027 B